Europäisches Patentamt

European Patent Office

Office européen des brevets

(11) Numéro de publication: **0 353 138 B1**

(12) **FASCICULE DE BREVET EUROPEEN**

(45) Date de publication de fascicule du brevet: **15.09.93**  (51) Int. Cl.5: **G02B 17/06**, G02B 23/12, G02B 5/10

(21) Numéro de dépôt: **89402093.2**

(22) Date de dépôt: **24.07.89**

(54) **Dispositif optique multispectral à miroirs.**

(30) Priorité: **26.07.88 FR 8810060**

(43) Date de publication de la demande:
**31.01.90 Bulletin 90/05**

(45) Mention de la délivrance du brevet:
**15.09.93 Bulletin 93/37**

(84) Etats contractants désignés:
**DE GB IT NL SE**

(73) Titulaire: **SOCIETE D'APPLICATIONS GENERA-LES D'ELECTRICITE ET DE MECANIOUE SA-GEM**
**6, Avenue d'Iéna**
**F-75783 Paris Cédex 16(FR)**

(72) Inventeur: **Lacuve, Jean**
**54, rue Jacques Frugier**
**F-91200 Athis Mons(FR)**

(74) Mandataire: **Fort, Jacques et al**
**CABINET PLASSERAUD 84, rue d'Amsterdam**
**F-75009 Paris (FR)**

(56) Documents cités:
**EP-A- 0 019 447**
**EP-A- 0 129 289**
**FR-A- 1 393 577**
**GB-A- 2 021 805**
**US-A- 4 632 521**

**INTERNATIONAL JOURNAL OF INFRARED AND MILLIMETER WAVES, vol. 8, no. 9, septembre 1987, pages 1167-1187, Plenum Publishing Corp., New York, US; J.A. MURPHY: "Distortion of a simple gaussian beam on reflection from off-axis ellipsoidal mirrors"**

**Lunettes et télescopes, DANJON et COUDER, Paris 1935, pages 249-250**

## Description

L'invention concerne les dispositifs de formation de l'image d'un objet à l'infini, capables de fonctionner dans un large domaine du spectre.

Il existe de plus en plus d'applications pour lesquelles un même dispositif optique doit fournir l'image d'un objet à l'infini à des capteurs fonctionnant dans des plages de longueur d'onde différentes, par exemple à une caméra de télévision fonctionnant dans le domaine visible de 0,4 $\mu$ à 0,7 $\mu$, à une caméra de télévision à tube silicium fonctionnant de 0,4 à 1 $\mu$, à un capteur fonctionnant dans l'infra-rouge proche, à un récepteur associé à un laser $CO_2$ à 10,6 $\mu$. Aucun des matériaux transparents pour l'ensemble de la plage allant de 0,4 à 14 $\mu$ n'est vraiment approprié pour constituer un objectif multispectral commun à plusieurs capteurs, car la plupart de ces matériaux sont hygroscopiques et ceux qui ne le sont pas ont une dispersion chromatique excessive.

On connaît par ailleurs des dispositifs à miroirs de formation de l'image d'un objet à l'infini et notamment divers types de téléscope. Mais les dispositifs optiques à miroirs connus, s'ils ont l'avantage d'un bon rendement dans une très large plage de fréquences et d'une absence complète de chromatisme, ont par contre deux inconvénients qui jusqu'ici les ont écartés de nombreuses applications : les systèmes existants ont une forte obturation centrale et un faible champ, ne dépassant en général pas 4°.

On connaît également (FR-A-1 393 577) un collimateur infrarouge comprenant un miroir primaire parabolique et un miroir secondaire hyperbolique de révolution autour d'un axe commun, ayant des foyers confondus. Cette disposition présente tous les inconvénients rappelés ci-dessus. L'adjonction d'un miroir elliptique ne permet en rien d'écarter ces inconvénients.

On connait également (Lunettes et téléscopes, Danjon et al, Paris 1935, pp. 249-250) un dispositif à miroirs de formation de l'image d'un objet à l'infini, du type comprenant successivement un miroir paraboloïde et un miroir hyperboloïde ayant des foyers confondus,. Les portions utilisées des miroirs sont hors d'axe et ne s'occultent pas mutuellement.

L'invention vise à fournir un dispositif du type ci-dessus défini répondant mieux que ceux antérieurement connus aux exigences de la pratique, notamment en ce qu'il permet d'atteindre des champs importants et ce sans introduire d'aberration géométrique excessive.

Dans ce but, l'invention propose notamment un dispositif conforme à la revendication 1.

On sera en général amené à adopter un angle d'incidence sur le miroir paraboloïde inférieur à l'angle d'incidence sur le miroir hyperboloïde, afin de pouvoir adopter pour les deux miroirs des dimensions en plan du même ordre sans qu'il y ait occultation partielle du faisceau par le miroir hyperboloïde. Souvent les deux miroirs seront orientés de façon que la déflexion totale du dispositif soit de 90° : ce sera notamment le cas lorsqu'est prévu un balayage en azimut autour de l'axe du faisceau de sortie, avec un faisceau d'entrée horizontal. Dans ce cas, l'angle d'incidence sur le miroir paraboloïde sera en général compris entre 15° et 22,5°.

Un tel dispositif permet d'obtenir une image qui est rigoureusement stigmatique pour un point sur l'axe optique. Moyennant une optimisation, on peut réduire les aberrations géométriques dans l'ensemble du champ à une valeur acceptable dans la plupart des cas. L'image en bord de champ peut encore être améliorée, sur chacune des voies obtenues, par fractionnement du faisceau en plusieurs fractions correspondant à des plages de longueur d'onde différentes à l'aide de moyens dichroïques, par une ou des lentilles sphériques, ou asphérisées centrées, classiques de reprise. On obtient ainsi une image de qualité homogène dans l'ensemble du champ.

L'invention est applicable dans des installations de nature très variée, chaque fois qu'il est nécessaire de disposer d'une optique d'entrée multispectrale. On peut notamment citer les installations de visée ayant un hublot unique d'entrée, incorporant des caméras travaillant dans le visible et dans l'infrarouge proche et/ou lointain et un système d'écartométrie ; l'invention s'applique également lorsqu'une telle installation à hublot unique comprend un laser d'illumination, de désignation ou de télémétrie (par exemple un laser YAG travaillant à 1,06 $\mu$, un laser hélium-néon travaillant à 0,63 $\mu$ et/ou un laser $CO_2$ travaillant à 10,6 $\mu$). Parmi d'autres applications possibles on peut citer les viseurs de trajectographie, les appareils de trajectographie d'avions en cours d'appontage, servant éventuellement d'éléments d'entrée à un système d'appontage automatique, les installations de veille infrarouge.

L'invention sera mieux comprise à la lecture de la description qui suit d'un mode particulier de réalisation, donné à titre d'exemple non limitatif. La description se réfère aux dessins qui l'accompagnent, dans lesquels :

- la figure 1 est un schéma de principe montrant la disposition relative des miroirs d'un dispositif suivant l'invention et les notations utilisées ;

- la figure 2, similaire à la figure 1, montre une disposition géométrique des miroirs correspondant à un cas particulier ;
- la figure 3 est un diagramme par points faisant apparaître la répartition régulière des aberrations autour de l'axe, dans le cas d'un dispositif optimisé suivant l'invention ;
- la figure 4, similaire à une fraction de la figure 2, montre l'adjonction d'une optique de correction sur l'une des voies de sortie d'un dispositif suivant la figure 2 ;
- la figure 5, similaire à la figure 3, montre les aberrations dans le cas d'un dispositif du genre montré en figure 4;
- la figure 6 est un schéma montrant une disposition possible des constituants optiques d'un viseur de conduite de tir mettant en oeuvre l'invention.

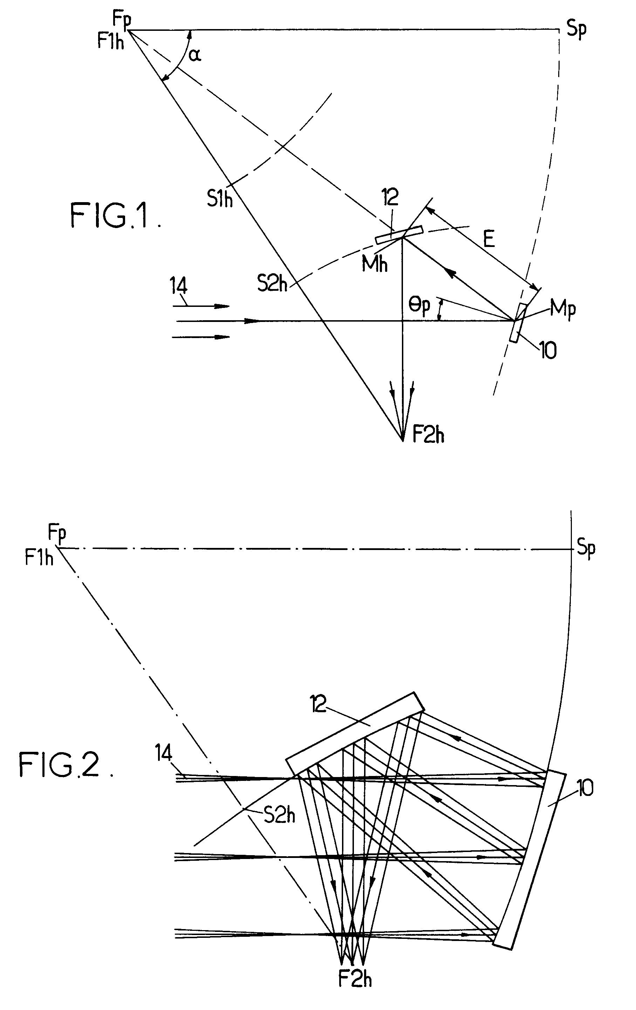

Le dispositif selon l'invention montré schématiquement en figure 1, comporte un miroir paraboloïde 10 et un miroir hyperboloïde 12, tous deux hors d'axe. Pour plus de clarté, les paramètres concernant les miroirs paraboloïde et hyperboloïde seront désignés par des symboles respectivement affectés des indices p et h.

Le miroir paraboloïde 10 présente une surface de réflexion qui reçoit le rayon moyen du faisceau d'entrée 14 en un point Mp, sous un angle d'incidence $\theta$p. Cette surface réflectrice est constituée par un tronçon d'un paraboloïde de sommet Sp et de longueur focale SpFp. Le dispositif est utilisé dans des conditions telles que le faisceau incident 14 soit sensiblement parallèle à l'axe du paraboloïde.

Le miroir hyperboloïde 12 du dispositif présente une surface réfléchissante, qui reçoit le rayon moyen en Mh, constituée par une fraction d'une des nappes d'un hyperboloïde, de sommet S2h et d'axe faisant un angle $\alpha$ avec celui du paraboloïde. L'excentricité de l'hyperboloïde et sa position relative par rapport au paraboloïde sont telles que, dans la disposition montrée sur la Figure 1, le foyer F1h contenu dans la concavité de la nappe de l'hyperboloïde autre que celle dont le miroir constitue une fraction, coïncide avec le foyer Fp du paraboloïde. L'ensemble des miroirs fournit une image au second foyer F2h de l'hyperboloïde. Dans le cas représenté, l'image est formée en F2h, après deux réflexions, par un faisceau dont le rayon moyen est perpendiculaire au faisceau d'entrée.

Pour un point sur l'axe, l'image est rigoureusement stigmatique. Pour réduire les aberrations dans l'ensemble du champ, plusieurs conditions doivent être respectées. Pour les faire apparaître, on considèrera maintenant les relations entre les différents paramètres du dispositif. On utilisera pour cela les notations suivantes, en plus de celles qui ont déjà été définies :

F :       longueur focale totale du système

$\gamma$ :       grandissement de l'hyperboloïde pour ses foyers Fh

E :       distance MpMh entre les deux miroirs, le long du rayon moyen

Z(X,Y) :       équation générale d'une surface asphérique du premier ordre dans le repère X,Y,Z dont Z est l'axe de symétrie

R :       rayon de courbure au sommet S de la surface asphérique

$\theta$ :       angle d'incidence sur le miroir Les paramètres ci-dessus sont reliés entre eux par plusieurs relations :

$$F = (FpMp).(MhF2h)/MhF1h = (FpMp).\gamma$$

et pour une demi-branche de chaque surface asphérique:

$$Z = \frac{X^2 + Y^2}{R\left(1 + \sqrt{1 - \frac{(cc+1)(X^2+Y^2)}{R^2}}\right)}$$

où cc est un coefficient fixe, dit coefficient d'asphérisation.

Pour un paraboloïde, cc = 1 ; le rayon de courbure au sommet est égal à $(2F/\gamma)\cos^2\theta$ et le décentrement, c'est-à-dire la distance entre l'axe $F_pS_p$ du paraboloïde et le rayon moyen incident, est égal à $(F/\gamma)\sin(2\theta)$.

Pour un hyperboloïde, le rayon de courbure et le coefficient d'asphérisation sont liés à $\gamma$ par les relations :

$$Rh = (F-\gamma E)\frac{1 + \sin(2\theta)}{1 - \gamma}$$

$$CC = -1 - 2\frac{\gamma}{(1-\gamma)^2}[\sin(2\theta) + 1]$$

L'angle $\alpha$ entre les axes du paraboloïde et de l'hyperboloïde est relié à $\theta$p par :

tg($\alpha$) = (sin 2$\theta$p + $\gamma$)/cos 2$\theta$p

Enfin la distance ShFp est reliée à R par :

ShFp = ShF1h = Rh/($\sqrt{-cc}$-1)

Il ressort de ces relations que le décentrement est proportionnel à la longueur focale totale F et à sin2$\theta$. Il faut en conséquence éviter des focales trop longues qui se traduisent par des décentrements trop importants des miroirs et en conséquence une fabrication difficile, surtout lorsque la fabrication implique de réaliser une calotte complète dans laquelle on découpe ensuite le miroir lui-même. Dans la pratique, la solution a notamment un intérêt pour des longueurs focales F entre 400 et 500 mm.

L'ouverture sur l'axe n'est pas limitée par les aberrations géométriques. Mais, pour éviter une obturation partielle du faisceau, on sera en général limité à une ouverture de l'ordre de F/2.

Souvent le dispositif sera prévu pour donner une déflexion totale de 90°. Dans le plupart des cas, il sera avantageux que l'angle d'incidence $\theta$p sur le paraboloïde soit inférieur (ou au plus égal) à l'angle d'incidence sur l'hyperboloïde. Dans la pratique, on donnera en général à $\theta$p une valeur comprise entre 15 et 22,5°. La distance E entre les deux miroirs, pour une focale comprise entre 400 et 700 mm, sera alors en général comprise entre 250 et 300 mm.

Pour rendre symétriques les aberrations dans les zones du champ éloigné de l'axe, il convient de donner au grandissement de l'hyperboloïde une valeur fonction de l'angle d'incidence $\theta$p. $\gamma$ peut être d'autant plus élévé que $\theta$ est faible. Pour une déviation totale de 90° on pourra adopter une valeur de $\gamma$ qui varie de 0,685 à 0,5 pour une variation de $\theta$ de 15 à 22,5°.

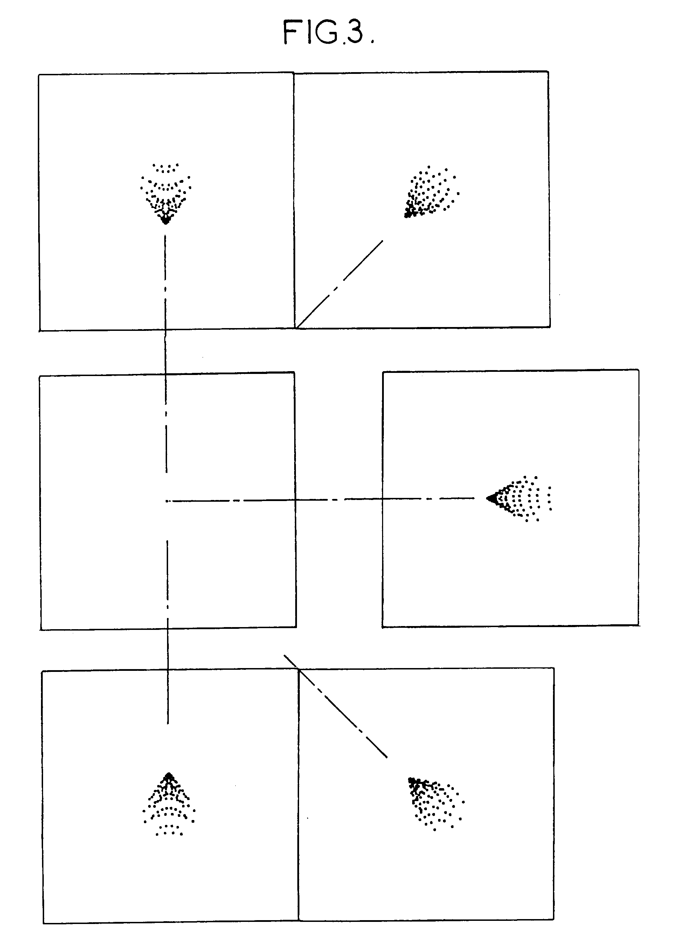

Pour un champ ne dépassant pas 4°, on peut, en respectant cette relation entre $\theta$ et $\gamma$, obtenir dans le plan focal du dispositif une tache en bord de champ de l'ordre de 0,5 mm, de sorte que l'image est acceptable, même en totalité, dans certains cas. La figure 3 montre, à titre d'exemple, le diagramme par point pour des emplacements au milieu du champ et en cinq emplacements répartis à 45° au bord du champ, avec:

F = 450 mm
$\theta$ = 17°
$\gamma$ = 0,635 E = 260 mm.

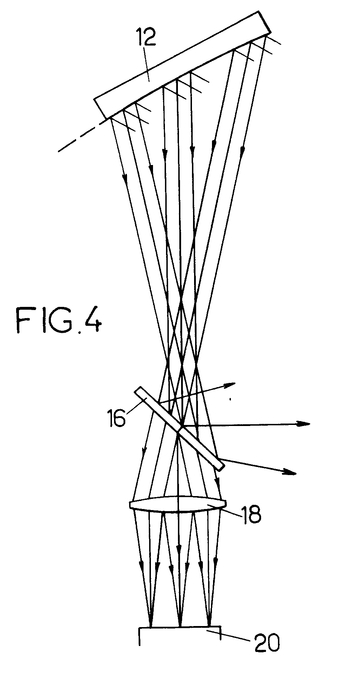

Lorsqu'il est nécessaire de réduire encore les aberrations en bord de champ, on effectue une correction par lentille sur les voies correspondant chacune à une plage de longueurs d'onde particulière. On peut alors utiliser la disposition montrée en figure 4 : une lame dichroïque 16 placée sur le faisceau de sortie du miroir hyperboloïde 12 permet d'obtenir deux faisceaux correspondant à deux plages différentes. La figure 4 montre une lentille asphérique de révolution 18 interposée sur l'un des faisceaux pour corriger les aberrations en bord de champ et obtenir une image sur un détecteur 20 correcte dans tout le champ. La lame 16 peut avoir une face avant plane de réflexion et une face arrière courbe, pour éliminer les aberrations qu'introduirait une lame à faces parallèles.

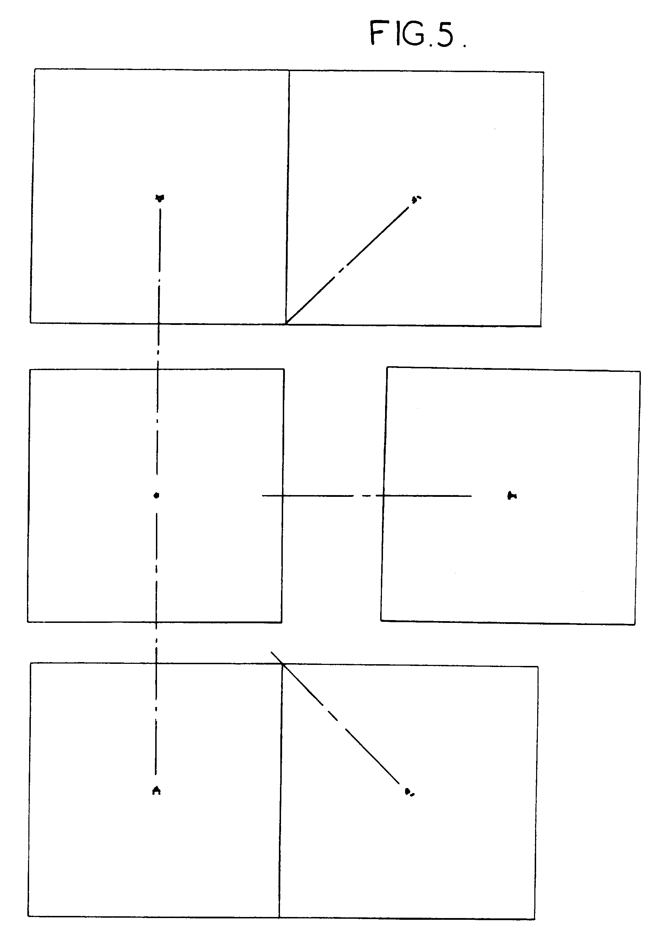

La figure 5, similaire à la figure 3, montre que les taches en bord de champ peuvent ainsi être réduites dans un rapport d'environ 10/1.

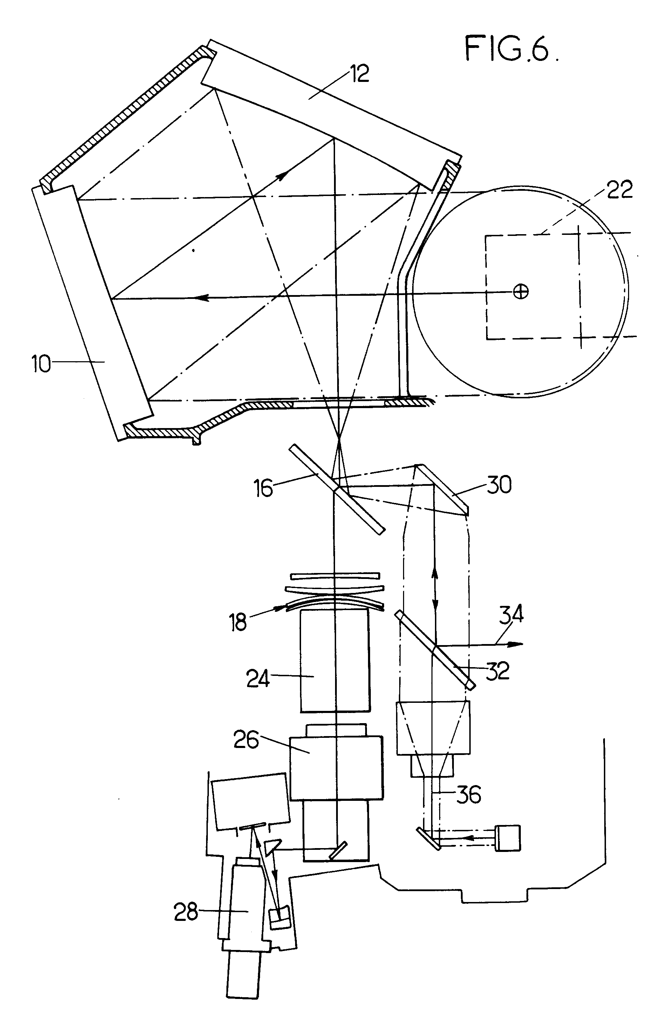

Un dispositif selon l'invention peut notamment être incorporé dans un viseur stabilisé du type montré schématiquement en figure 6. Le viseur comprend un miroir déflecteur d'entrée 22, commandé par un système asservi à un gyroscope, envoyant sous incidence constante un faisceau de lumière parallèle sur le miroir paraboloïde 10. Le faisceau de sortie du miroir hyperboloïde 12 est fractionné par la lame dichroïque 16 qui transmet un faisceau infra-rouge vers une optique 24, un dérotateur 26 et un caméra infra-rouge 28.

Le faisceau réfléchi par la lame dichroïque 16, comprenant par exemple la lumière visible et le proche infra-rouge jusqu'à 1,54 $\mu$, est réfléchi par un miroir 30 puis fractionné par une nouvelle lame dichroïque 32 en une voie visible 34 (dont le capteur est par exemple une caméra de télévision) et une voie laser 36.

**Revendications**

1. Dispositif à miroirs de formation de l'image d'un objet à l'infini, comprenant successivement un miroir paraboloïde (10) et un miroir hyperboloïde (12) tous deux concaves et ayant des foyers confondus, dans lequel les sufaces réflectrices du miroir paraboloïde et du miroir hyperboloïde sont des portions hors d'axe des conoïdes correspondants et ont des dimensions du même ordre de grandeur, dans lequel le paraboloïde est tel qu'un faisceau incident dont le rayon moyen est parallèle à son axe ait un angle d'incidence ($\theta$p) sur le miroir paraboloïde (10) tel que le miroir hyperboloïde (12) n'occulte pas ce faisceau incident et dans lequel les rayons de courbure des deux miroirs sur leur axe ne diffèrent pas de plus de 10 %.

2. Dispositif selon la revendication 1, caractérisé en ce que l'angle d'incidence ($\theta$p) sur le miroir paraboloïde est inférieur à l'angle d'incidence sur le miroir hyperboloïde.

3. Dispositif selon la revendication 1 ou 2, caractérisé en ce que les deux miroirs sont orientés de façon que la déflexion totale du dispositif soit de 90°.

4. Dispositif selon la revendication 3, caractérisé en ce que l'angle d'incidence ($\theta$p) sur le miroir paraboloïde est compris entre 15° et 22,5°.

5. Dispositif selon la revendication 3 ou 4, caractérisé en ce que les miroirs ont des distances focales comprises entre 400 et 700 mm.

6. Dispositif selon la revendication 5, caractérisé en ce que la distance entre les deux miroirs est comprise entre 250 et 300 mm.

7. Dispositif selon l'une quelconque des revendications précédentes, caractérisé en ce que les miroirs sont placés et dimensionnés de façon que le grandissement du dispositif soit lié à l'angle de réflexion ($\theta$p) sur le miroir paraboloïde par une fonction décroissante, correspondant à des valeurs de $\gamma$ proches de 0,685 et 0,5 pour $\theta$p = 15° et $\theta$p = 22,5°, respectivement.

8. Dispositif selon l'une quelconque des revendications précédentes, caractérisé en ce qu'il comprend de plus, en aval du miroir hyperboloïde (12), des moyens (16,34) de séparation du faisceau en plusieurs voies correspondant à des plages spectrales différentes et au moins une lentille de révolution, destinée à corriger la coma, sur les voies.

**Claims**

1. Mirror device for providing an image of a remote object, successively comprising a paraboloid mirror (10) and a hyperboloid mirror (12), both concave and having coinciding focusses, wherein the reflecting surfaces of the paraboloid mirror and hyperboloid mirror are off-axis portions of the respective conoids and have sizes of the same order of magnitude, wherein the paraboloid is such that an incident beam whose mean ray is parallel to the axis thereof has an angle of incidence ($\theta$p) on the paraboloid mirror (10) such that the hyperboloid mirror (12) does not obscure said incident beam and wherein the radii of curvature of the two mirror on the axes thereof do not differ by more than 10%.

2. Device according to claim 1, wherein the angle of incidence ($\theta$p) on the paraboloid mirror is lower than the angle of incidence on the hyperboloid mirror.

3. Device according to claim 1 or 2, characterized in that the two mirrors are mutually arranged for the total deflection of the device to be of 90°.

4. Device according to claim 3, characterized in that the angle of incidence ($\theta$p) on the paraboloid mirror is of from 15° to 22.5°.

**5.** Device according to claim 3 or 4, characterized in that the mirrors have focal lengths of from 400 to 700 mm.

**6.** Device according to claim 5, characterized in that the distance between the two mirrors is of from 250 to 300 mm.

**7.** Device according to any one of the preceding claims, wherein the mirrors are located and dimensioned for the enlarging power of the device to be related to the angle of reflection ($\theta$p) on the paraboloid mirror by a decreasing function, corresponding to values of $\gamma$ close to 0.685 and 0.5 for $\theta$p = 15° and $\theta$p = 22.5°, respectively.

**8.** Device according to any one of the preceding claims, characterized in that it further comprises, downstream of the hyperboloid mirror (12), means (16,34) for separating the beam into a plurality of channels corresponding to different spectral ranges and at least one lens having a rotational symmetry for correcting coma on the channels.

**Patentansprüche**

**1.** Spiegelgerät zur Bildung eines Objektbildes im Unendlichen, das nacheinander einen Parabolspiegel (10) und einen Hyperbolspiegel (12) umfaßt, die beide konkav sind und zusammenfallende Brennpunkte aufweisen, in welchem die reflektierenden Flächen des Parabolspiegels und des Hyperbolspiegels nicht-axiale Teile von entsprechenden Konoiden einschließen und eine Größenausdehnung in derselben Größenordnung aufweisen, in welchem der Paraboloid so gestaltet ist, daß ein einfallender Strahl, dessen mittlerer Radius parallel zu seiner Achse verlauft, einen Einfallswinkel ($\theta$p) auf den Parabolspiegel (10) aufweist, in der Art, daß der Hyperbolspiegel (12) den einfallenden Strahl nicht verdeckt, und in welchem der Krümmungsradius der beiden Spiegel auf ihre Achse sich um nicht mehr als 10 % voneinander unterscheidet.

**2.** Gerät nach Anspruch 1, **dadurch gekennzeichnet, daß** der Einfallswinkel ($\theta$p) auf den Parabolspiegel kleiner als der Einfallswinkel auf den Hyperbolspiegel ist.

**3.** Gerät nach Anspruch 1 oder 2, **dadurch gekennzeichnet, daß** die beiden Spiegel in der Weise ausgerichtet sind, daß die Gesamtablenkung des Gerätes gleich 90° ist.

**4.** Gerät nach Anspruch 3, **dadurch gekennzeichnet, daß** der Einfallswinkel ($\theta$p) auf den Parabolspiegel zwischen 15° und 22,5° liegt.

**5.** Gerät nach Anspruch 3 oder 4, **dadurch gekennzeichnet, daß** die Spiegel eine Brennweite zwischen 400 und 700 mm aufweisen.

**6.** Gerät nach Anspruch 5, **dadurch gekennzeichnet, daß** der Abstand zwischen den beiden Spiegeln zwischen 250 und 300 mm liegt.

**7.** Gerät nach einem der vorangegangenen Ansprüche, **dadurch gekennzeichnet, daß** die Spiegel so angeordnet und dimensioniert sind, daß die Vergrößerung des Gerätes mit dem Reflexionswinkel ($\theta$p) auf den Parabolspiegel durch eine abfallende Funktion verknüpft ist, entsprechend den Werten von nahe 0,685 und 0,5 für $\theta$p = 15° bzw. $\theta$p = 22,5°.

**8.** Gerät nach einem der vorangegangenen Ansprüche, **dadurch gekennzeichnet, daß** es außerdem vor dem Hyperbolspiegel (12) eine Einrichtung (16, 34) umfaßt zur Aufteilung des Strahls in mehrere Wege entsprechend verschiedenen spektralen Bereichen und mindestens eine Umkehrlinse zur Korrektur des Komas auf den Wegen.

FIG.1.

FIG.2.

# FIG.3.

FIG.4

# FIG.5.

FIG.6.